# EUROPÄISCHE PATENTANMELDUNG

(11) **EP 3 680 509 A1**
(43) Veröffentlichungstag der Anmeldung: **15.07.2020**
(21) Anmeldenummer: 19214665.2
(22) Anmeldetag: 10.12.2019
(51) Int. Cl.: F16F 7/01

(54) **SANDWICHPLATTE MIT AKUSTISCHEN DÄMPFUNGSEIGENSCHAFTEN**

(30) Priorität: 21.12.2018 DE 202018107378 U
(71) Anmelder: Elbe Flugzeugwerke GmbH, 01109 Dresden (DE)
(72) Erfinder: Becker, Lars, 01109 Dresden (DE); Ludwig, Ronny, 01109 Dresden (DE); Andrich, Dr. Manuela, 01109 Dresden (DE); Kolbeckel, Heiko, 01109 Dresden (DE)
(74) Vertreter: LKGLOBAL Lorenz & Kopf PartG mbB Patentanwälte

(57) **Zusammenfassung**

Eine Sandwichplatte mit akustischen Dämpfungseigenschaften ist beschrieben. Die Sandwichplatte umfasst wenigstens einen Stützkern, zwei Decklagen, zwischen denen der Stützkern angeordnet ist und Füllmaterial, welches Dämpfungseigenschaften aufweist. Der Stützkern weist eine wabenförmige Struktur mit einer Mehrzahl von Wabenzellen auf. Die wabenförmige Struktur ist dazu eingerichtet, das Füllmaterial aufzunehmen, welches Blähglas, Blähton oder anorganische Materialien umfasst. Eine Anzahl der Wabenzellen von der Mehrzahl von Wabenzellen weist einen unterschiedlichen Füllgrad des Füllmaterials auf.

## Beschreibung

### GEBIET DER ERFINDUNG

Die vorliegende Erfindung befasst sich mit einer Sandwichplatte mit akustischen Dämpfungseigenschaften, einem System zum Herstellen der Sandwichplatte sowie einem Flugzeug, welches eine oder mehrere Sandwichplatten umfasst.

### HINTERGRUND DER ERFINDUNG

Eine Sandwichplatte mit verbesserter Schallabsorption ist beispielsweise aus EP2196308A1 bekannt. Es wird eine Sandwichplatte beschrieben, bei der eine Kernschicht Hohlräume aufweist. Die Kernschicht ist zwischen zwei Deckschichten angeordnet. Die Hohlräume können bei Bedarf mit einem schallabsorbierenden Material, wie zum Beispiel einem PU-Schaum gefüllt werden, so dass lokal erhöhte Schallabsorptionseigenschaften der Sandwichplatte erreicht werden.

### ZUSAMMENFASSUNG DER ERFINDUNG

Eine Aufgabe der vorliegenden Erfindung besteht daher darin, die Dämpfungseigenschaften der bekannten Sandwichplatten zu verbessern.

Der Erfindung liegen folgende Kenntnisse zugrunde.

Fußbodenplatten oder Leichtbauplatten, die beispielsweise in Flugzeugen, Zügen, Schiffen oder anderen Fahrzeugen eingebaut werden, sind meist so ausgelegt, dass sie gegen hohe mechanisch/physikalische Beanspruchungen bei gleichzeitig geringem Gewicht widerstandsfähig sind. Durch die leichte Bauweise bei gleichzeitig (extrem) hoher Steifigkeit ist es jedoch möglich, dass sich die genannten Platten, beispielsweise in einem Flugzeug, wie eine Membran verhalten und Schwingungen durch Luftschall oder Körperschall leicht übertragen.

Zur Lärmpegeldämpfung werden die Platten mit einem geeigneten leichten Dämpfungsmaterial versehen. Beispielsweise werden Silikonmatten auf die Rückseite der Platte aufgeklebt. Eine solche Lösung ist meist mit großem Aufwand verbunden und kann hohe Kosten verursachen. Auch kann die Haltbarkeit der Klebeverbindung eine Lebensdauerbeschränkung nach sich ziehen und ein Risiko darstellen. Eine andere Möglichkeit sind die oben genannten Sandwichplatten, die mit Schaum gefüllt sind. Es ist auch möglich Sand in Hohlräume der Sandwichplatte zu füllen. Jedoch sind solche Lösungen teuer und erhöhen deutlich das Gewicht der Sandwichplatte. Eine weitere Möglichkeit ist das Einbringen von viskoelastischen Schichten, wobei dadurch die Dicke der Platte erhöht wird, die Steifigkeit geringer wird und das Gewicht zunimmt. Allen bisherigen Lösungen ist gemeinsam, dass die Schalldämmung als vollflächige Zusatzschicht eingebracht oder angebracht wird.

Diese Nachteile werden überwunden mit einer Sandwichplatte, einem System zum Herstellen der Sandwichplatte und einem Flugzeug nach einem der unabhängigen Ansprüche.

Es sei darauf hingewiesen, dass die folgenden beschriebenen Aspekte einzeln oder in Kombination für die Sandwichplatte, das System, und/oder das Flugzeug zutreffen.

Gemäß der Erfindung weist eine Sandwichplatte akustische Dämpfungseigenschaften auf, wobei die Sandwichplatte umfasst: wenigstens einen Stützkern, zwei Decklagen, zwischen denen der Stützkern angeordnet ist und Füllmaterial, welches Dämpfungseigenschaften aufweist. Der Stützkern weist eine wabenförmige Struktur mit einer Mehrzahl von Wabenzellen auf. Die wabenförmige Struktur ist dazu eingerichtet, das Füllmaterial aufzunehmen, welches Blähglas, Blähton oder anorganische Materialien umfasst. Eine Anzahl der Wabenzellen von der Mehrzahl von Wabenzellen weist einen unterschiedlichen Füllgrad des Füllmaterials auf.

Die Sandwichplatte, auch Sandwichpaneel oder Verbundplatte genannt, umfasst zwei Decklagen, beispielsweise Laminatdecklagen oder Metall-Decklagen, welche mit dem Stützkern über einen Klebefilm oder durch Verpressen verbunden sind. Die wabenförmige Struktur kann beispielsweise aus harzgetränktem Kunstfaser-Papier, Metallfolien (z.B. Aluminium), sonstigen Werkstoffen (Kunststoffen) und Verbundwerkstoffen gefertigt sein. Die zwei Decklagen umfassen eine obere und eine untere Decklage.

Das Füllmaterial absorbiert Vibrationen, Schall und/oder Energie und bildet somit die akustischen Dämpfungseigenschaften der Sandwichplatte aus. Das Füllmaterial, insbesondere Blähglas, Blähton oder andere anorganische Materialien ist frei von Schadstoffen oder gesundheitsgefährdenden Substanzen. Sein Gewicht ist gering und kompressions-resistent. Es ist resistent gegen Säure, Lauge oder organische Lösungsmittel, gegen Frost und ist dimensionsstabil bis zu 750° C. Das Füllmaterial, insbesondere Blähglas, Blähton oder andere anorganische Materialien, ist nicht brennbar, thermisch isolierend, alkalisch und ungiftig. Diese Eigenschaften sind insbesondere von Bedeutung, wenn die Sandwichplatten in der Luftfahrt eingesetzt werden. Blähglas oder geschäumtes Glas, oder Blähton kann eine Dichte von etwa 0,3g/cm³ aufweisen, so dass sein Gewicht sehr niedrig ist.

In einem Beispiel wird das Füllmaterial als Granulat in die wabenförmige Struktur aufgenommen. Das Granulat kann eine Korngröße von 0,25 mm bis 0,5 mm aufweisen.

In einem Beispiel ist das Füllmaterial innerhalb einer Wabenzelle in der wabenförmigen Struktur frei beweglich. Das Füllmaterial absorbiert durch seine Bewegungsfähigkeit in der Wabenzelle Vibrationen, Schall und/oder Energie und bildet somit die akustischen Dämpfungseigenschaften der Sandwichplatte aus. Mit anderen Worten, die Bewegung des Füllmaterials, beispielsweise des Granulats, ist räumlich durch die Wabenzelle begrenzt, hat jedoch innerhalb der Wabenzelle genügend Raum, um zu schwingen und so den Schall, die Vibrationen und/oder Energie zu absorbieren.

In einem Beispiel weist die wabenförmige Struktur mehrere Wabenzellen auf, welche das Füllmaterial aufnehmen. Die Wabenzellen sind begrenzte Hohlräume, die dazu eingerichtet sind, das Füllmaterial beispielsweise als Granulat aufzunehmen.

Wenigstens eine Anzahl der Wabenzellen weisen einen unterschiedlichen Füllgrad des Füllmaterials auf. Der Füllgrad kann in allen gefüllten Wabenzellen unterschiedlich sein. Beispielsweise sind manche Wabenzellen vollständig, andere teilweise oder gar nicht gefüllt. Der Füllgrad wird durch die Notwendigkeit der Dämpfung bestimmter Zonen oder Bereiche der Sandwichplatte bestimmt. Durch einen variablen Füllgrad kann eine bestimmte Gewichtsverteilung innerhalb der Sandwichplatte eingestellt werden. Der Füllgrad der Wabenzellen kann zwischen 0% und 100% betragen. Beispielsweise weist eine erste Gruppe der Wabenzellen einen ersten Füllgrad auf, eine zweite Gruppe von anderen Wabenzellen weist einen anderen Füllgrad auf. Der Füllgrad der Wabenzellen kann allerdings auch in der ersten und/oder zweiten Gruppe unterschiedlich sein. D.h., dass die Wabenzellen der ersten und/oder zweiten Gruppe mit einem unterschiedlichen Füllgrad gefüllt sind. Die erste und/oder zweite Gruppe von Wabenzellen entspricht damit der Anzahl der Wabenzellen von der Mehrzahl von Wabenzellen, die einen unterschiedlichen Füllgrad des Füllmaterials haben.

In einem Beispiel bildet wenigstens eine Anzahl gefüllter Wabenzellen ein vordefiniertes Füllmuster aus. Durch die Füllung der Wabenzelle(n) nach einem bestimmten Füllmuster ändern sich die Schwingungseigenschaften der Sandwichplatte. Durch das Füllmuster kann gezielt auf das Schwingungsverhalten der Platte Einfluss genommen werden, indem die lokalen Masseunterschiede die durch Schwingung erzeugten Plattenverformungen (Berge und Täler) verändert oder Auslenkungen (Amplituden) verringert werden.

In einem Beispiel werden die Dämpfungseigenschaften der Sandwichplatte entsprechend dem Füllgrad und/oder dem Füllmuster ausgebildet. Somit können beispielsweise Eigenfrequenzen der Sandwichplatte verschoben oder deren Schwingungsamplitude verringert werden.

In einem Beispiel sind die Dämpfungseigenschaften der Sandwichplatte für unterschiedliche Bereiche der Sandwichplatte unterschiedlich ausgebildet. Insbesondere bei Sandwichplatten, die in einem Bereich, beispielsweise in einem Flugzeug, eingesetzt werden, so dass die Sandwichplatten nur teilweise einer hohen akustischer Belastung ausgesetzt sind, sind Bereiche mit unterschiedlichen Dämpfungseigenschaften besonders geeignet.

In einem Beispiel ist das vordefinierte Füllmuster regelmäßig oder unregelmäßig innerhalb der wabenförmigen Struktur verteilt. Ein regelmäßiges Füllmuster bildet gleichmäßige Dämpfungseigenschaften der Sandwichplatte aus. Ein unregelmäßiges Füllmuster bietet die Möglichkeit, die Dämpfungseigenschaften gezielt an die Anforderungen anzupassen.

In einem Beispiel sind diejenigen Wabenzellen, die das Füllmuster ausbilden, teilweise gefüllt. Der Füllgrad der Wabenzelle kann gleich und/oder zwischen 0% und 100% sein. Der Füllgrad wird entsprechend der gewünschten oder geforderten Schallreduktion der Sandwichplatte ausgebildet.

Gemäß einem Aspekt der Erfindung wird ein System zum Herstellen der Sandwichplatte angegeben. Das System umfasst eine Legevorrichtung, eine Füllmaschine, eine Verpressvorrichtung, wobei die Legevorrichtung dazu eingerichtet ist, eine Decklage bereitzustellen und den Stützkern mit einer wabenförmigen Struktur auf der Decklage anzuordnen. Die Füllmaschine ist dazu eingerichtet, die wabenförmige Struktur nach einem definierten Füllmuster und Füllgrad mit einem Füllmaterial zu befüllen. Die Legevorrichtung ist dazu eingerichtet, eine weitere Decklage auf dem befüllten Stützkern anzuordnen. Die Verpressvorrichtung ist dazu eingerichtet, die zwei Decklagen mit dem Stützkern zu einer Sandwichplatte zu verpressen, wobei Wabenzellen des Stützkernes durch das Verpressen geschlossen werden.

Eine oder mehrere Decklage(n) werden als Unterlage(n) von der Legevorrichtung angeordnet oder platziert. Die Unterlage(n) kann mit oder ohne Klebeschicht bereitgestellt werden. Dann wird eine oder mehrere wabenförmige Struktur(en) auf der Unterlage(n) angeordnet. Das Füllmaterial wird in die Wabenzellen der wabenförmigen Struktur eingebracht. Nach dem Befüllen der wabenförmigen Struktur wird eine oder mehrere weitere Decklage(n) als Oberlage(n) auf dem Stützkern angeordnet. Die Oberlage(n) kann mit oder ohne Klebeschicht bereitgestellt werden. Mit dem finalen Verpressen der Platte werden die Wabenhohlräume, also die Wabenzellen, automatisch verschlossen. Der so erzeugte feste Verbund ist eine Sandwichplatte mit akustischen Dämpfungseigenschaften. Der Lärmpegel kann z.B. bei Körperschall im Frequenzband 400 Hz bis 500 Hz um bis zu 35% gegenüber Sandwichplatten ohne akustische Dämpfung und bis zu 15% gegenüber Sandwichplatten aus dem Stand der Technik reduziert werden.

Gemäß einem Aspekt der Erfindung ist ein Flugzeug vorgesehen, dass wenigstens eine Sandwichplatte mit akustischen Dämpfungseigenschaften umfasst. Der Einbau einer oder mehrerer dieser Sandwichplatten in einem Flugzeug reduziert den Lärmpegel und erhöht den Komfort der Passagiere. Der Begriff Flugzeug umfasst alle Fluggeräte, beispielsweise Großraumflugzeuge für einige hundert Passagiere oder Flugzeuge für wenige Passagiere, sogenannte Businessjets, Kleinflugzeuge, Helikopter oder anderes Fluggerät, bei dem der Lärmpegel reduziert werden soll.

Selbstverständlich ist von der Erfindung auch der Einbau einer oder mehrerer Sandwichplatte mit akustischen Dämpfungseigenschaften in Züge, Schiffe oder anderen Fahrzeugen umfasst. Durch die Verwendung dieser Sandwichplatten kann eine effiziente Schallabsorption erreicht werden.

Es sei darauf hingewiesen, dass auch diejenigen Merkmale frei miteinander kombiniert werden, bei denen dies nicht explizit erwähnt ist.

Diese und weitere Aspekte der Erfindung werden unter Bezugnahme und mit Verweis auf die folgenden Ausführungen ersichtlich.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: Ausführungsbeispiel einer Sandwichplatte;
- Fig. 2: Draufsicht für die Sandwichplatte aus Fig. 1;
- Fig. 3: Seitenansichten eines jeweiligen Teils der Sandwichplatte aus Fig.1 oder 2;
- Fig. 4: weiteres Ausführungsbeispiel einer Sandwichplatte;
- Fig. 5: weiteres Ausführungsbeispiel einer Sandwichplatte; und
- Fig. 6: Flugzeug mehrere Sandwichplatten aufweisend.

### DETAILLIERTE BESCHREIBUNG VON AUSFÜHRUNGSFORMEN

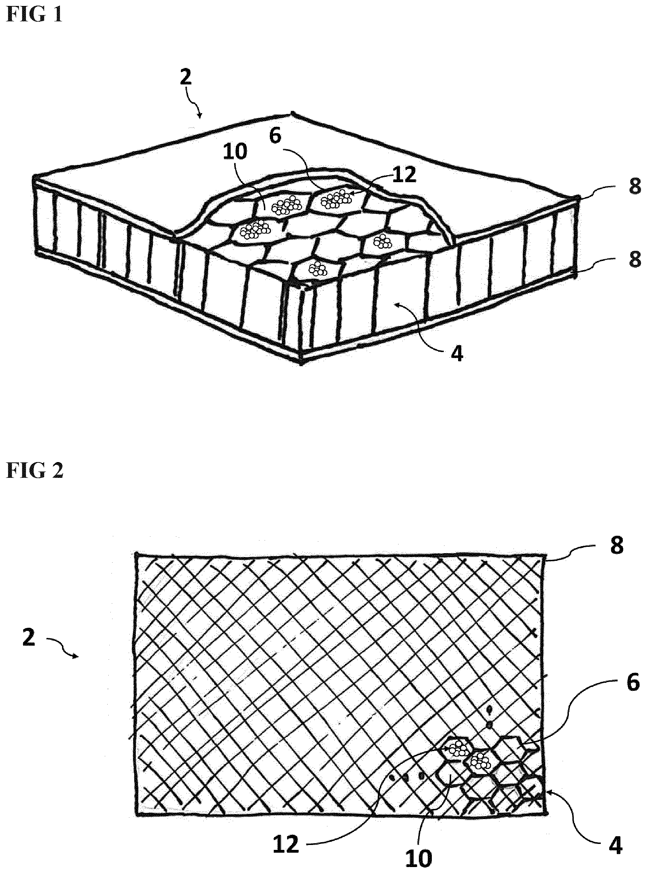

Fig. 1 zeigt ein Ausführungsbeispiel einer Sandwichplatte 2. Ein Stützkern 4 weist eine wabenförmige Struktur 6 auf. Der Stützkern 4 ist zwischen zwei Decklagen 8 angeordnet. Optional ist eine Klebeschicht (nicht gezeigt) zwischen der jeweiligen Decklage 8 und dem Stützkern 4 angeordnet. Zum besseren Verständnis sind die Bestandteile der Sandwichplatte 2 nicht maßstabsgetreu gezeigt, sondern eher vergrößert.

Die Wabenzellen 10 der wabenförmige Struktur 6 nehmen Füllmaterial 12 auf, welches Dämpfungseigenschaften aufweist. In diesem Ausführungsbeispiel ist das Füllmaterial 12 Blähglas. In anderen Ausführungsbeispielen kann das Füllmaterial Blähton oder andere anorganische Materialien umfassen.

Das Füllmaterial 12 kann als Granulat in den Wabenzellen 10 aufgenommen werden. Innerhalb einer Wabenzelle 10 ist das Füllmaterial 12 frei beweglich. Das Füllmaterial 12 absorbiert durch seine Bewegungsfähigkeit in der Wabenzelle 10 Vibrationen, Schall und/oder Energie.

Fig. 2 zeigt eine Draufsicht für die Sandwichplatte aus Fig. 1. Zum besseren Verständnis ist nur die untere Decklage 8 als schraffierte Ebene gezeigt.

Die wabenförmige Struktur 6 umfasst Wabenzellen 10, wobei nur ein Teil der Wabenzellen 10 gezeigt wird, die zudem vergrößert dargestellt sind. Füllmaterial 12 ist in den Wabenzellen 10 aufgenommen.

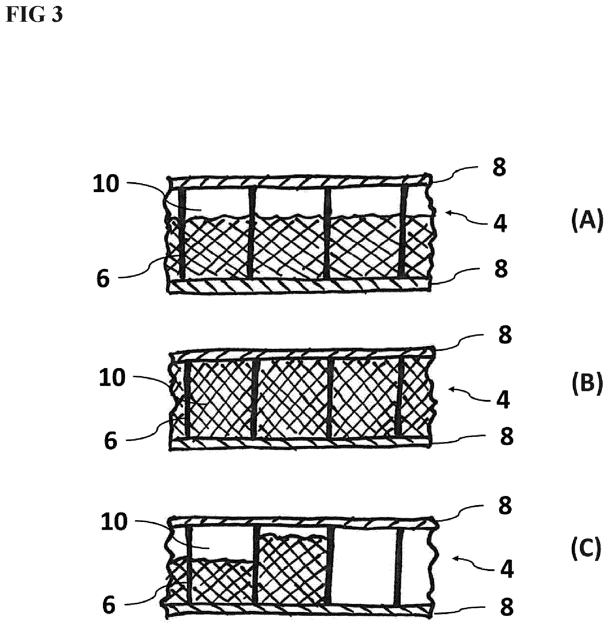

Bei der Sandwichplatte 2 aus Figur 1 und 2 haben die Wabenzellen 10 gleichen oder unterschiedlichen Füllgrad. Dies ist in Figur 3 als Seitenansicht verschiedener Teile der Sandwichplatte 2 gezeigt. Der Füllgrad ist zum besseren Verständnis als Schraffur gezeigt. In anderen Ausführungsbeispielen ist der Füllgrad für die gesamte Sandwichplatte 2 gleich.

In Figur 3(A) ist der Füllgrad von 60% in den Wabenzellen 10 gleich.

Figur 3(B) zeigt die Wabenzellen 10 mit einem Füllgrad von 100%.

Figur 3(C) zeigt die Wabenzellen 10 mit unterschiedlichen Füllgrad. Einige der gezeigten Wabenzellen 10 sind ohne Füllmaterial 12 (keine Schraffur). Der Füllgrad variiert zwischen 50% und 80% für verschiedene Wabenzellen 10.

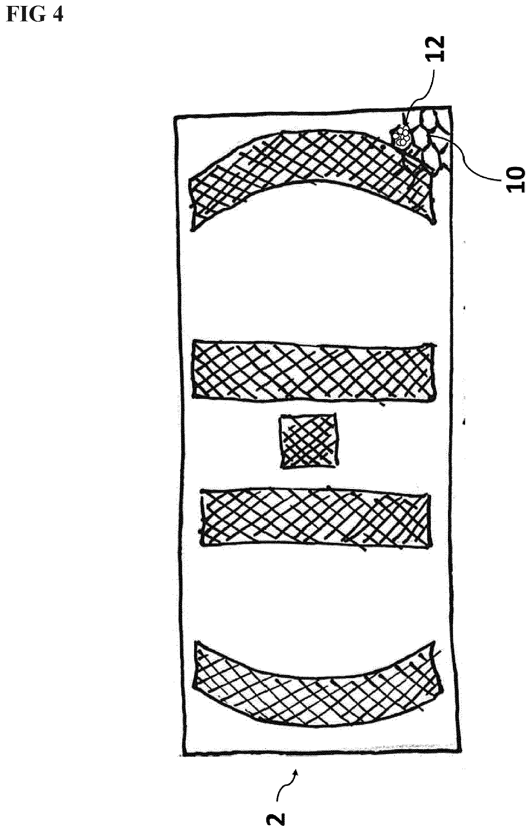

Fig. 4 zeigt ein weiteres Ausführungsbeispiel einer Sandwichplatte 2. Zur besseren Ansicht sind nur diejenigen Wabenzellen 10 gezeigt, die Füllmaterial 12 aufnehmen. Zur besseren Ansicht ist die Darstellung der Wabenzellen 10 und des Füllmaterials 12 nicht maßstabsgetreu. Des Weiteren sind die gefüllten Wabenzellen 10 nur als Schraffur dargestellt zum besseren Verständnis des Füllmusters.

Das Füllmuster für die Sandwichplatte 2 ist vordefiniert. Entsprechend den Anforderungen an die Dämpfungseigenschaften der Sandwichplatte 2 werden nur diejenigen Wabenzellen 10 befüllt, durch deren Füllung sich die Schwingungseigenschaften der Sandwichplatte 2 ändern. Das Füllmuster verändert gezielt das Schwingungsverhalten der Sandwichplatte, indem die lokalen Masseunterschiede die durch Schwingung erzeugten Plattenverformungen (Berge und Täler) verändert oder Auslenkungen (Amplituden) verringert werden.

Die Dämpfungseigenschaften der Sandwichplatte 2 können entsprechend dem Füllgrad und/oder dem Füllmuster ausgebildet. Für den Füllgrad wird auf Figur 3 verwiesen. Somit können die Eigenfrequenzen der Sandwichplatte verschoben oder deren Schwingungsamplitude verringert werden.

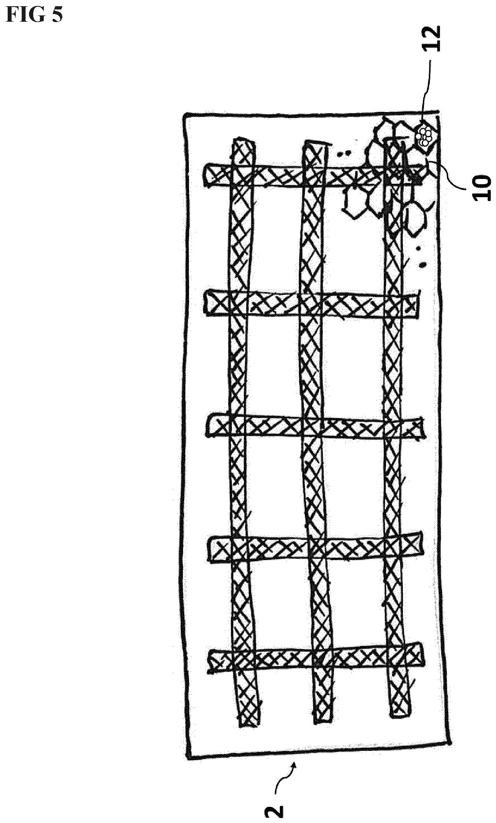

Fig. 5 zeigt ein weiteres Ausführungsbeispiel einer Sandwichplatte 2. Das Füllmuster ist regelmäßig innerhalb der wabenförmigen Struktur verteilt.

Zur besseren Ansicht sind nur diejenigen Wabenzellen 10 gezeigt, die Füllmaterial 12 aufnehmen. Zur besseren Ansicht ist die Wiedergabe der Wabenzellen 10 und des Füllmaterials 12 nicht maßstabsgetreu. Des Weiteren sind die gefüllten Wabenzellen 10 nur als Schraffur dargestellt zum besseren Verständnis des Füllmusters.

Die Dämpfungseigenschaften der Sandwichplatte 2 sind gleichmäßig über die Sandwichplatte 2 verteilt. Die Wabenzellen 10 sind teilweise gefüllt.

Es ist auch möglich die Wabenzellen 10 unterschiedlich zu befüllen, also mit unterschiedlichem Füllgrad in dem regelmäßigen Füllmuster.

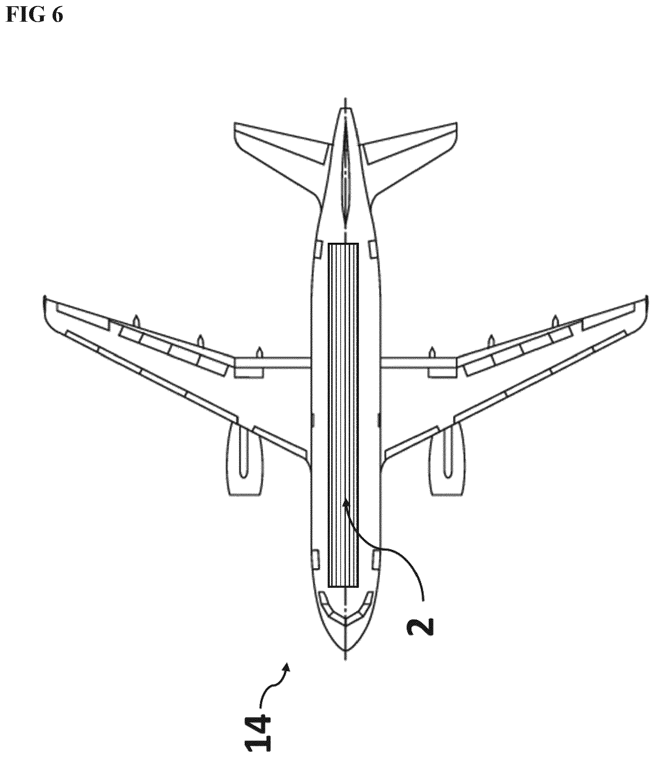

Fig. 6 zeigt ein Flugzeug 14 mehrere Sandwichplatten 2 aufweisend. Die Sandwichplatten 2 sind in diesem Ausführungsbeispiel skizzenhaft als Fußbodenplatten gezeigt. Die Fußbodenplatten sind Sandwichplatten wie in einer der Figuren 1 bis 5 beschrieben.

Der Lärmpegel im Flugzeug 14 kann durch Verwendung der Fußbodenplatten deutlich reduziert werden, wobei die Steifigkeit und die leichte Bauweise der Sandwichplatten 2 erhalten bleibt.

Die oberhalb beschriebenen Ausführungsbeispiele können in unterschiedlicher Art und Weise kombiniert werden. Insbesondere können auch Aspekte des Verfahrens für Ausführungsformen der Scheibenkombination oder des Systems sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Sandwichplatte mit akustischen Dämpfungseigenschaften, wobei die Sandwichplatte umfasst:
- wenigstens einen Stützkern;
- zwei Decklagen, zwischen denen der Stützkern angeordnet ist; und
- Füllmaterial, welches Dämpfungseigenschaften aufweist;
wobei der Stützkern eine wabenförmige Struktur mit einer Mehrzahl von Wabenzellen aufweist;
wobei die wabenförmige Struktur dazu eingerichtet ist das Füllmaterial aufzunehmen,
wobei das Füllmaterial Blähglas, Blähton oder anorganische Materialien umfasst; und
wobei eine Anzahl der Wabenzellen von der Mehrzahl von Wabenzellen einen unterschiedlichen Füllgrad des Füllmaterials aufweist.

2. Sandwichplatte nach Anspruch 1, wobei das Füllmaterial als Granulat in die wabenförmige Struktur aufgenommen wird.

3. Sandwichplatte nach einem der vorhergehenden Ansprüche, wobei das Füllmaterial innerhalb einer Wabenzelle in der wabenförmigen Struktur frei beweglich ist.

4. Sandwichplatte nach Anspruch 1 oder 2, wobei die wabenförmige Struktur mehrere Wabenzellen aufweist, welche das Füllmaterial aufnehmen.

5. Sandwichplatte nach einem der vorhergehenden Ansprüche, wobei wenigstens eine Anzahl gefüllter Wabenzellen ein vordefiniertes Füllmuster ausbilden.

6. Sandwichplatte nach einem der vorhergehenden Ansprüche, wobei die Dämpfungseigenschaften der Sandwichplatte entsprechend dem Füllgrad und/oder dem Füllmuster ausgebildet werden.

7. Sandwichplatte nach einem der vorhergehenden Ansprüche, wobei die Dämpfungseigenschaften der Sandwichplatte für unterschiedliche Bereiche der Sandwichplatte unterschiedlich ausgebildet sind.

8. Sandwichplatte nach einem der vorhergehenden Ansprüche, wobei das vordefinierte Füllmuster regelmäßig oder unregelmäßig innerhalb der wabenförmigen Struktur verteilt ist.

9. Sandwichplatte nach einem der vorhergehenden Ansprüche, wobei diejenigen Wabenzellen, die das Füllmuster ausbilden, teilweise gefüllt sind.

10. System, zum Herstellen einer Sandwichplatte nach einem der Ansprüche 1 bis 9, umfassend:
- eine Legevorrichtung;
- eine Füllmaschine;
- eine Verpressvorrichtung,
wobei die Legevorrichtung dazu eingerichtet ist, eine Decklage bereitzustellen und den Stützkern mit einer wabenförmigen Struktur mit einer Mehrzahl von Wabenzellen auf der Decklage anzuordnen;
wobei die Füllmaschine dazu eingerichtet ist, die wabenförmige Struktur nach einem definierten Füllmuster und Füllgrad mit einem Füllmaterial so zu befüllen, dass eine Anzahl der Wabenzellen von der Mehrzahl von Wabenzellen einen unterschiedlichen Füllgrad des Füllmaterials aufweist;
wobei die Legevorrichtung dazu eingerichtet ist, eine weitere Decklage auf dem befüllten Stützkern anzuordnen;
wobei die Verpressvorrichtung dazu eingerichtet ist, die zwei Decklagen mit dem Stützkern zu einer Sandwichplatte zu verpressen, wobei Wabenzellen des Stützkernes durch das Verpressen geschlossen werden.

11. Flugzeug, umfassend wenigstens eine Sandwichplatte nach einem der Ansprüche 1 bis 9.
